# EUROPÄISCHE PATENTSCHRIFT

(11) **EP 0 435 114 B1**
(45) Veröffentlichungstag und Bekanntmachung des Hinweises auf die Patenterteilung: **31.05.1995**
(21) Anmeldenummer: 90124249.5
(22) Anmeldetag: 14.12.1990
(51) Int. Cl.: B60T 8/00

(54) **Verfahren zum Steuern der Bremsdrucke in den Bremsen der Hinterräder eines zweispurigen Fahrzeuges**
Process for the control of brake pressure in the rear wheel brakes of a road vehicle
Procédé pour commander la pression de freinage dans les freins des roues arrières d'un véhicule à deux ornières

(30) Priorität: 29.12.1989 DE 3943308
(43) Veröffentlichungstag der Anmeldung: 03.07.1991
(73) Patentinhaber: LUCAS INDUSTRIES PUBLIC LIMITED COMPANY, Solihull, West Midlands B91 3TX (GB)
(72) Erfinder: Braschel, Volker, W-5450 Neuwied (DE); Seitz, Dieter, W-5450 Neuwied (DE)
(74) Vertreter: von Hellfeld, Axel, Dr. Dipl.-Phys.

(56) Entgegenhaltungen:
- EP-A- 0 088 894
- FR-A- 2 442 165
- GB-A- 2 218 165

## Beschreibung

Die Erfindung betrifft ein Verfahren zum Steuern des Bremsdruckes in den Bremsen der Hinterräder eines zweispurigen Fahrzeuges, bei dem die Drehgeschwindigkeiten zumindest der Hinterräder gemessen und in Abhängigkeit von an den einzelnen Hinterrädern auftretenden instabilen und stabilen Zuständen der Bremsdruck abgebaut, konstant gehalten oder aufgebaut wird, wobei zumindest zeitweise der Bremsdruck eines stabilen Hinterrades an den Bremsdruck eines instabilen Hinterrades angenähert wird.

Ein solches Verfahren wird auch mit "select low" bezeichnet, weil das Drehverhalten eines sogenannten "low"-Rades herangezogen wird, um auch den Bremsdruck in der Bremse des sogenannten "high"-Rades zu steuern. Hiermit wird verhindert, daß an der Hinterachse bei unterschiedlichen Reibungskoeffizienten zwischen den linken und rechten Hinterrädern ein zu starkes Drehmoment um die Hochachse des Fahrzeuges auftritt, welches dem Fahrzeug die Fahrstabilität nehmen würde.

Es sind eine Vielzahl von Algorithmen zum Steuern des Bremsdruckes in einer blockiergeschützten Fahrzeug-Bremsanlage bekannt. Die zum Durchführen einer ABS-Bremsregelung erforderlichen Meßeinrichtungen, Ventile und Steuereinrichtungen sind in vielfältiger Ausgestaltung ebenfalls bekannt. Neue Verfahren zum Steuern des Bremsdruckes in ABS-Anlagen werden unter Verwendung bekannter Meß- und Steuereinrichtungen (Drehzahlsensoren, Ventile etc.) durch entsprechende Programmierung eines Prozessors verwirklicht.

Das Ziel, bei einer ABS-Regelung einen möglichst kurzen Bremsweg bei guter Lenkbarkeit des Fahrzeuges zu erreichen, wird erschwert durch den Umstand, daß die Optimierung einer ABS-Regelung wesentlich von den Straßen- und Fahrzeugverhältnissen abhängt. Die Regelung muß den gerade herrschenden Verhältnissen, welche sich laufend ändern können und über welche der die ABS-Bremsung steuernde Rechner nur sehr indirekte und eingeschränkte Informationen erhält, angepaßt sein.

Neigt ein Rad aufgrund seines Schlupfes bzw. aufgrund seiner Drehverzögerung zum Blockieren, so wird dieses Rad als "instabil" bezeichnet. Lassen hingegen die Drehverzögerung bzw. der Schlupf eines Rades noch kein Blockieren befürchten, so gilt dieses Rad als "stabil".

Es ist im Stand der Technik bekannt, zur Gewährleistung einer guten Lenkbarkeit (Stabilität) des Fahrzeuges die obengenannte "Select-Low-Regelung" an den Rädern der Hinterachse des Fahrzeuges durchzuführen. Bei einer "Select-Low-Regelung" wird angenommen, daß ein Rad der Hinterachse eines zweispurigen Fahrzeuges schneller instabil wird als ein anderes. Die Ursachen hierfür können vielfältig sein, zum Beispiel unterschiedliche Reibungskoeffizienten der Fahrbahn, unterschiedliche Füllvolumen der Radbremszylinder, unterschiedliche Toleranzen der Ventilschaltzeiten oder der Ventilbedrosselungen. Eine reine "Select-Low-Regelung" sieht in einem solchen Fall vor, daß auch am noch stabil laufendem Rad der Hinterachse eine Antiblockierregelung stattfindet, d.h. der Druck so wie am instabilen Rad abgebaut wird.

Eine reine "Select-Low"-Regelung der oben beschriebenen Art hat zwar den Vorteil einer guten Fahrstabilität des Fahrzeuges, ist aber mit dem Nachteil verbunden, daß Bremsweg verschenkt wird weil das stabile Hinterrad stärker gebremst werden könnte. Durch Druckabbau am stabilen Hinterrad entsteht außerdem auch eine erhöhte Differenz der Bremsmomente an der Hinterachse, die auch durch einen Schlupf am sogenannten "Low-Rad" hervorgerufen wird.

In der DE-OS 28 30 580 wird eine blockiergeschützte Bremsanlage beschrieben, bei der eine "Select-Low"-Regelung derart modifiziert ist, daß die Zeitspanne für eine anfängliche Bremsdruckeinspeisung in die Bremse des sogenannten "High-Rades" im Vergleich mit der Bremsdruckeinspeisung am sogenannten "Low-Rad" verlängert wird.

In der DE-OS 28 12 000 wird ebenfalls eine Modifizierung einer "Select-Low"-Regelung beschrieben. Zur Vermeidung von Giermomenten auf Fahrbahnen mit unterschiedlichen Reibbeiwerten für die linken und rechten Fahrzeugräder einer Achse wird zunächst der Bremsdruck am sogenannten "High-Rad" (also dem auf höherem Reibbeiwert laufenden Rad) für eine feste Zeitspanne konstant gehalten und anschließend pulsierend erhöht.

Durch die fest vorgegebene Zeitspanne der Konstanthaltung des Bremsdruckes am "High-Rad" ist aber nur eine unzureichende Anpassung der Bremsung an unterschiedliche Reibbeiwerte der Straße möglich.

Aus der DE-OS 23 20 559 ist bekannt, eine modifizierte Individualregelung derart vorzusehen, daß während eines Abbaus des Bremsdruckes am blockiergefährdeten Rad der Bremsdruck am mitgesteuerten, noch stabilen Rad konstant gehalten wird.

In der DE-PS 28 51 107 wird vorgeschlagen, den Bremsdruck in der Bremse des "High-Rades" erst dann abzubauen, wenn das "Low-Rad" wieder stabil geworden ist.

Die Erfindung setzt sich das Ziel, ein Verfahren zum Steuern der Bremsdrucke in den Bremsen der Hinterräder eines zweispurigen Fahrzeuges bereitzustellen, mit dem auch bei unterschiedlichen Reibbeiwerten der Fahrbahn ein möglichst kurzer Bremsweg bei möglichst guter Stabilität des Fahrzeuges erreicht wird.

Die Erfindung löst diese Aufgabe dadurch, daß nach Einleiten eines Druckabbaus in der Bremse eines instabilen Hinterrades der Druck in der Bremse des stabilen Hinterrades für eine vorgegebene Zeitspanne konstant gehalten und dann solange abgebaut wird, bis der Druck in der Bremse des instabilen Rades konstant gehalten oder aufgebaut wird.

Die vorstehend verwendeten Begriffe "stabiles Rad" und "instabiles Rad" können auch in der üblichen Bezeichnungsweise durch "high"-Rad bzw. "low"-Rad ersetzt werden.

In einer bevorzugten Ausgestaltung des erfindungsgemäßen Verfahrens ist vorgesehen, daß kurz vor oder bei Einleiten eines Druckaufbaus in der Bremse eines zuvor instabilen Rades der Bremsdruck in der Bremse des stabilen Rades an den Druck in der Bremse des zuvor instabilen Rades angenähert wird und daß anschließend der Bremsdruck in beiden Bremsen aufgebaut wird.

Die vorgegebene Zeitspanne, nach welcher der Druck am high-Rad abgebaut wird, obwohl das high-Rad noch stabil ist, wird bevorzugt in einem Bereich von 20 bis 80, vorzugsweise zwischen 30 und 50 Millisekunden vorgegeben.

Es versteht sich, daß die vorstehend beschriebenen Regelalgorithmen voraussetzen, daß das stabile Rad tatsächlich stabil ist, d.h. daß die Auswertung des Drehverhaltens des stabilen Rades nicht anzeigt, daß ein Schlupf bzw. seine Drehverzögerung so groß sind, daß ein Druckabbau auch am high-Rad erforderlich ist.

Eine weitere Modifikation des vorstehend beschriebenen Grundregelalgorithmus wird dann vorgenommen, wenn sich das low-Rad relativ schnell wieder "erholt", d.h. so stark beschleunigt wird, daß es schnell wieder einen stabilen Bereich der Reibbeiwert/Schlupf-Kurve erreicht. Liegt deshalb die Wiederbeschleunigung des low-Rades vor Ablauf des vorgegebenen Zeitintervalls Δt oberhalb eines vorgegebenen Schwellenwertes, so erfolgt eine Angleichung des Bremsdruckes des high-Rades an den Bremsdruck des low-Rades schon vor Ablauf der Zeitspanne Δt, nämlich kurz vor dem Druckaufbau am low-Rad, so daß ausgehend von gleichem Niveau der Druck am low- und am high-Hinterrad gemeinsam aufgebaut wird.

Wenn das zunächst instabile Rad (low-Rad) im Anschluß an einen Druckabbau eine Wiederbeschleunigung erfährt, die größer ist als ein vorgegebener Wert, wird eine verbesserte Bremswirkung dadurch erzielt, daß in der Bremse des stabilen und/oder des zunächst instabilen Rades zumindest ein Druckaufbaupuls eingespeist wird. Bevorzugt werden sowohl das low- als auch das high- Rad mit einem solchen Druckaufbaupuls beaufschlagt.

Nachfolgend wird anhand der Zeichnung ein Ausführungsbeispiel der Erfindung näher beschrieben. Es zeigt:
- Fig. 1a: den Verlauf der Drehgeschwindigkeiten des low- und des high-Hinterrades für einen relativ geringen Reibbeiwert, bei dem ein tiefes Druckniveau erreicht wird;
- Fig. 1b: über der gleichen Zeitskala wie Fig. 1a den Verlauf der Bremsdrucke in den Bremsen des low- und des high-Hinterrades;
- Fig. 2a und 2b: eine Darstellung entsprechend Fig. 1, wobei ein hoher Reibbeiwert vorausgesetzt ist und ein entsprechend hohes Druckniveau sowie eine relativ kurze Druckabbauzeitspanne; der Zeitmaßstab in Fig. 2 ist gegenüber Fig. 1 etwa um einen Faktor 4 gestreckt;
- Fig. 3: eine Darstellung entsprechend den Fig. 1 und 2, wobei ein relativ hoher Reibbeiwert und eine relativ hohe Wiederbeschleunigung des low-Rades vorausgesetzt sind;
- Fig. 4: eine Darstellung entsprechend den Fig. 1 bis 3, wobei angenommen ist, daß beide Hinterräder instabil werden und einen Druckabbau erfordern;
- Fig. 5: einen relativ langen Druckabbau sowohl am low- als auch am high-Hinterrad, wobei eine weitgehende Angleichung der herrschenden Bremsdrucke erfolgt; und
- Fig. 6: ein Flußdiagramm zur Ausführung eines erfindungsgemäßen Regelalgorithmus.

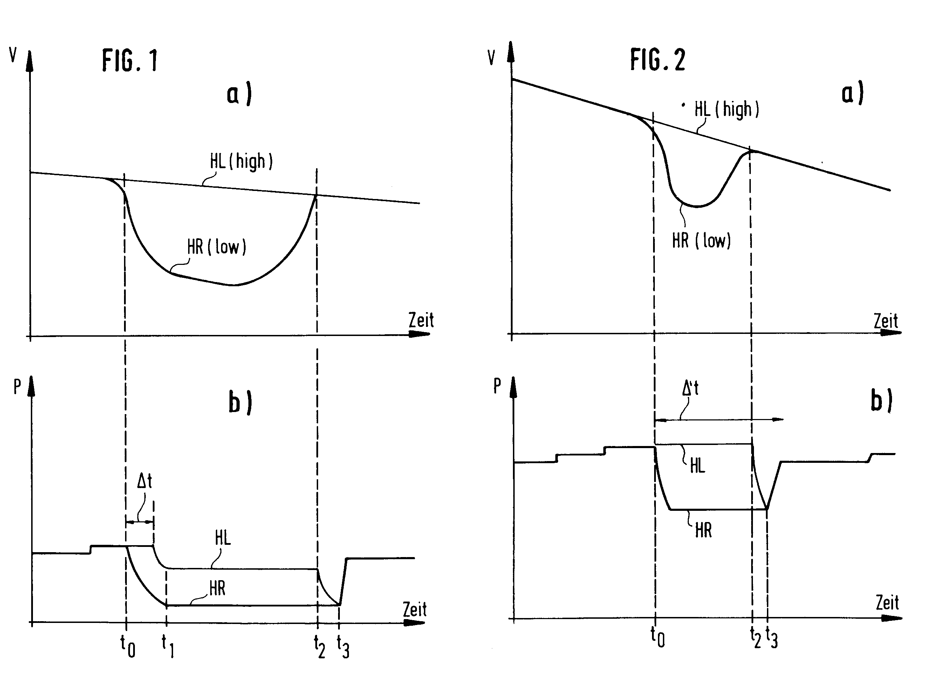

Fig. 1a zeigt in üblicher Darstellung den Verlauf der Drehgeschwindigkeiten der Hinterräder HL und HR eines vierrädrigen Fahrzeuges. Das rechte Hinterrad HR möge auf relativ glatterem Untergrund laufen als das linke Hinterrad HL. Entsprechend die Bezeichnungen "low" und "high" in den Figuren.

Fig. 1b zeigt über der gleichen Zeitskala den zugehörigen Verlauf der Bremsdrucke am low- und am high-Hinterrad. Vorausgesetzt ist dabei ein relativ geringer Reibungskoeffizient der Fahrbahn, d.h. es liegt ein relativ geringes Druckniveau vor (vgl. mit Fig. 2).

Zum Zeitpunkt t₀ zeigt der gemessene Schlupf bzw. die Drehverzögerung des low-Rades HR an, daß ein Druckabbau erforderlich ist, weil das Rad instabil wird. Das high-Rad ist zu diesem Zeitpunkt noch stabil. Beim Ausführungsbeispiel gemäß Fig. 1 wird das high-Rad zu keinem Zeitpunkt instabil.

Zum Zeitpunkt t₁ zeigen die Meßwerte bezüglich des low-Rades an, daß eine Druckkonstanthaltung erforderlich ist.

Das high-Hinterrad wird ab dem Zeitpunkt tₒ für eine vorgegebene Zeitspanne Δt von z.B. 40 ms auf konstantem Bremsdruck gehalten. Danach wird der Druck am high-Rad abgesenkt bis zum Zeitpunkt t₁. Ab dem Zeitpunkt t₁ wird auch am high-Hinterrad der Druck konstant gehalten, allerdings auf höherem Niveau als der Bremsdruck des low-Hinterrades HR. Hierdurch wird mit dem high-Hinterrad eine relativ hohe Bremswirkung erzielt. Dabei herrscht im Vergleich zu einer herkömmlichen "Select-Low"-Regelung eine geringere Differenz der Bremsmomente.

Zum Zeitpunkt t₂ stellt der Rechner der ABS-Anlage fest, daß das low-Rad HR wieder beginnt, in einen stabilen Bereich der Reibbeiwert/Schlupf-Kurve zu laufen. Deshalb wird zum Zeitpunkt t₂ auch der Bremsdruck am high-Hinterrad HL abgebaut, so daß er zum Zeitpunkt t₃ das gleiche Niveau hat wie der Bremsdruck am low-Hinterrad. Zum Zeitpunkt t₃ werden die Bremsdrücke an beiden Rädern HL und HR gemeinsam aufgebaut.

Fig. 2 zeigt den Fall eines relativ hohen Reibbeiwertes (griffige Fahrbahn) und entsprechend hohe Druckniveaus und kurze Druckabbauzeiten. Die Zeitskala in Fig. 2 ist gegenüber Fig. 1 wesentlich gestreckt, ca. um einen Faktor 4 bis 5, man vergleiche die Zeitspannen Δt, welche in beiden Fällen gleich sind, nämlich z.B. 40 ms.

Aufgrund des guten Reibbeiwertes erholt sich das low-Rad relativ schnell, nämlich vor Ablauf der 40 ms, weshalb die Angleichung des Bremsdruckes am High-Rad nach Ablauf der vorgegebenen Zeitspanne Δt (40 ms) nicht auftritt. In diesem Falle wird gemäß Fig. 2b der Bremsdruck am high-Hinterrad HL zum Zeitpunkt t₂, also kurz (wenige ms) vor Beginn der Druckerhöhung am low-Hinterrad (t₃) abgesenkt und die beiden Bremsdrucke HL und HR werden auf gleiches Niveau gebracht.

Ein Vergleich der Fig. 1 und 2 zeigt, daß im letzeren Fall ein relativ großer Druckunterschied zwischen dem high- und dem low-Hinterrad über einen relativ langen Zeitraum beibehalten wird, was den Vorteil hat, daß mit dem high-Hinterrad eine relativ gute Bremswirkung erzielt wird. Aufgrund der vorausgesetzten guten Reibbeiwerte bleibt trotzdem eine gute Seitenführung für das Fahrzeug erhalten. Ein gefährliches Giermoment um die Hochachse des Fahrzeuges kann aufgrund der abgeschwächten Differenz der Bremsmomente an den Rädern der Hinterachse nicht auftreten.

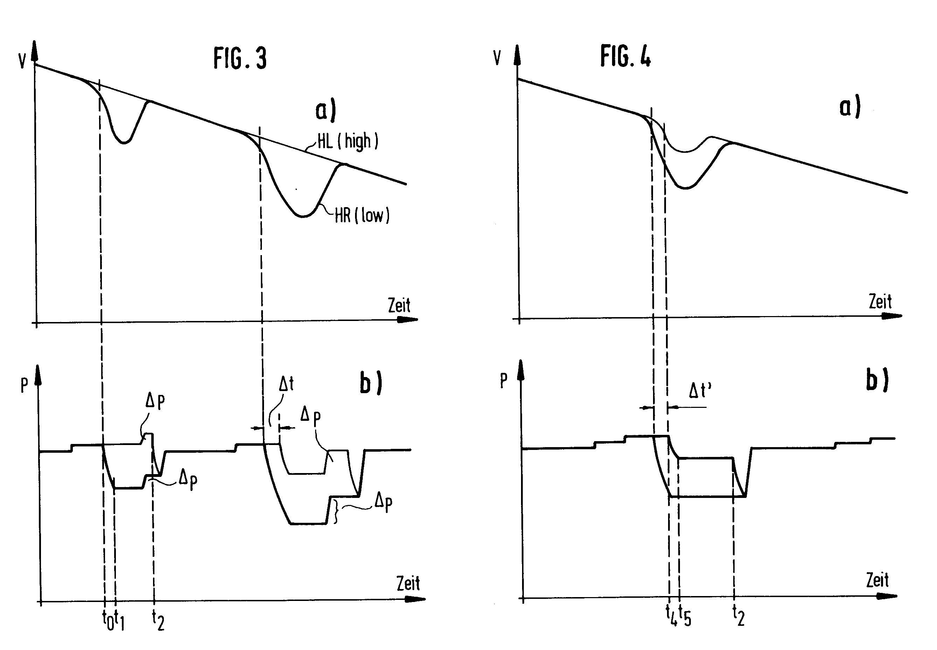

Fig. 3 zeigt Verhältnisse, die ebenfalls einen hohen Reibbeiwert voraussetzen. Das low-Rad beschleunigt in beiden in Fig. 3 gezeigten Regelzyklen stärker als ein vorgegebener Schwellenwert. Dies zeigt an, daß das low-Rad auf gute Fahrbahn gekommen ist. Es kann deshalb zur Verkürzung des Bremsweges der Bremsdruck ohne Gefahr eines Stabilitätsverlustes erhöht werden. Dies ist in Fig. 3b dargestellt. Sowohl das high-Hinterrad als auch das low-Hinterrad erhalten einen kurzen Druckimpuls Δp, der als Funktion der gemessenen Wiederbeschleunigung beim zweiten Regelzyklus gemäß Fig. 3 noch stärker ausfällt als beim ersten Regelzyklus. Beim zweiten Regelzyklus gemäß Fig. 3b wird die vorgegebene Zeitspanne Δt (40 ms) erreicht, d.h. es erfolgt ein Abbau des Bremsdruckes am high-Rad nach Ablauf der Zeitspanne Δt.

Fig. 4 setzt voraus, daß beide Räder aufgrund der für sie jeweils gesondert gemessenen Schlupf- und Drehverzögerungswerte instabil werden, so daß für beide Räder unabhängige Druckabbauanforderungen gestellt werden. In diesem Falle hat die Druckabbauanforderung bei beiden Rädern höchste Priorität. Die Zeitspanne Δt' ist beim Beispiel gemäß Fig. 4b kleiner oder gleich der vorgegebenen Zeitspanne Δt. Nach der Zeitspanne Δt' zum Zeitpunkt t₄ zeigt aber die Messung des Drehverhaltens des high-Rades an, daß es instabil wird und deshalb einen unabhängigen Druckabbau erfordert. Zum Zeitpunkt t₅ zeigen die Messungen, daß eine Konstanthaltung des Bremsdruckes erforderlich ist, wie in Fig. 4b dargestellt ist. Zum Zeitpunkt t₂ erfolgt eine Angleichung der Bremsdrucke, wie oben beschrieben.

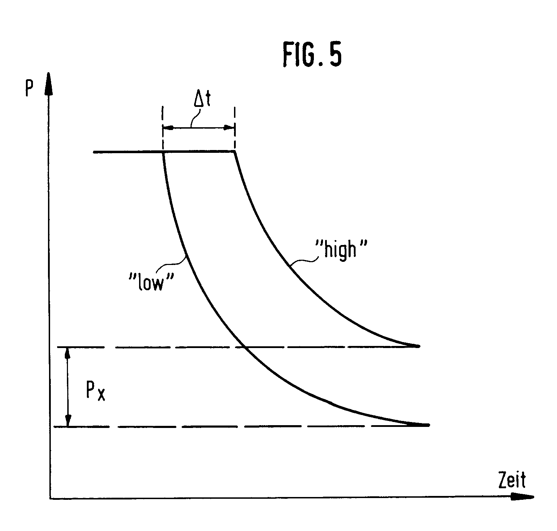

Fig. 5 zeigt die Verhältnisse bei einem relativ langen Druckabbau entsprechend einem relativ geringem Reibbeiwert. Wie dargestellt, gleichen sich hier die Bremsdrucke des high- und des low-Hinterrades stark an, beispielsweise im Vergleich mit Fig. 2, so daß die Unterschiede der Bremsmomente links und rechts am Fahrzeug relativ gering sind. Dies trägt der relativ glatten Fahrbahn Rechnung und verhindert ein Drehmoment um die Hochachse des Fahrzeuges.

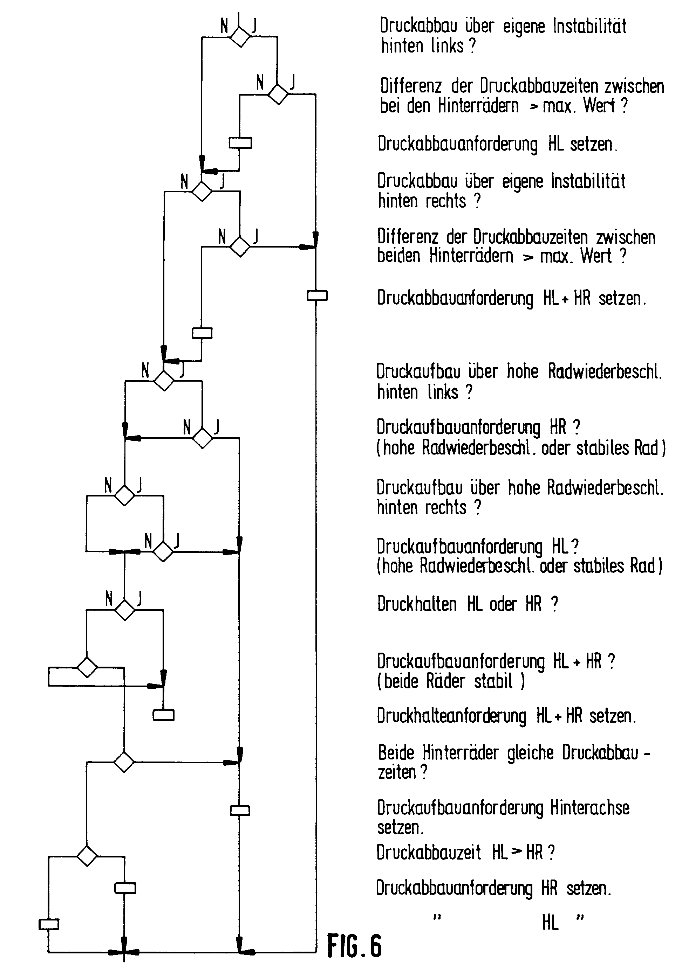

Fig. 6 zeigt ein Flußdiagramm zur Software-Implementierung eines vorstehend beschriebenen ABS-Algorithmus.

## Patentansprüche

1. Verfahren zum Steuern des Bremsdruckes in den Bremsen der Hinterräder eines zweispurigen Fahrzeuges, bei dem die Drehgeschwindigkeiten zumindest der Hinterräder gemessen und in Abhängigkeit von an den einzelnen Hinterrädern auftretenden instabilen und stabilen Zuständen der Bremsdruck abgebaut, konstant gehalten oder aufgebaut wird, wobei zumindest zeitweise der Druck in der Bremse eines stabilen Hinterrades an den Druck in der Bremse eines instabilen Hinterrades angenähert wird,
dadurch **gekennzeichnet,**
daß nach Einleiten eines Druckabbaus in der Bremse eines instabilen Hinterrades der Druck in der Bremse des stabilen Hinterrades für eine vorgegebene Zeitspanne (Δt) konstant gehalten und dann solange abgebaut wird, bis der Druck in der Bremse des instabilen Rades konstant gehalten oder aufgebaut wird.

2. Verfahren nach Anspruch 1,
dadurch **gekennzeichnet,**
daß kurz vor oder bei Einleiten eines Druckaufbaus in der Bremse eines zuvor instabilen Rades der Bremsdruck in der Bremse des stabilen Rades an den Druck in der Bremse des zuvor instabilen Rades angenähert wird und daß anschließend der Bremsdruck in beiden Bremsen aufgebaut wird.

3. Verfahren nach einem der Ansprüche 1 oder 2,
dadurch **gekennzeichnet,**
daß die vorgegebene Zeitspanne 20 bis 80 ms beträgt.

4. Verfahren nach Anspruch 3,
dadurch **gekennzeichnet,**
daß die vorgegebene Zeitspanne 30 bis 50 ms beträgt.

5. Verfahren nach einem der vorhergehenden Ansprüche,
dadurch **gekennzeichnet,**
daß dann, wenn das zunächst instabile Rad wieder stabil wird bevor die vorgegebene Zeitspanne (Δt) nach Beginn des Druckabbaus in der Bremse des zunächst instabilen Rades abgelaufen ist, der Druck in der Bremse des stabilen Rades kurz vor oder bei Einleiten eines Druckaufbaus in der Bremse des zunächst instabilen Rades an den Druck in der Bremse des zunächst instabilen Rades angenähert wird und daß anschließend die Bremsdrucke in beiden Bremsen gemeinsam aufgebaut werden.

6. Verfahren nach einem der vorhergehenden Ansprüche,
dadurch **gekennzeichnet,**
daß dann, wenn ein zunächst instabiles Rad im Anschluß an einen Druckabbau eine Wiederbeschleunigung erfährt, die größer ist als ein vorgegebener Wert, in der Bremse des stabilen und/oder des zunächst instabilen Rades zumindest ein Druckaufbaupuls (Δp) vorgesehen ist.

## Claims

1. A process for the control of brake pressure in the rear wheel brakes of a road vehicle, wherein the rotational speeds at least of the rear wheels are measured and the brake pressure is released, maintained constant, or built up, depending on the unstable or stable states arising at the individual rear wheels, the pressure in the brake of a stable rear wheel being approximated at least temporarily to the pressure in the brake of an unstable rear wheel,
**characterized in that**
following initiation of a pressure release in the brake of an unstable rear wheel, the pressure in the brake of the stable rear wheel is maintained constant for a predetermined time span (Δt) and is subsequently released until the pressure in the brake of the unstable wheel is either maintained constant or raised.

2. The process as set forth in claim 1,
wherein
the brake pressure in the brake of the stable wheel is approximated to the pressure in the brake of a previously unstable wheel just before or when initiating a pressure build-up in the brake of the previously unstable wheel, and then the brake pressure is built-up in both brakes.

3. The process as set forth in claim 1 or 2,
wherein
said predetermined time span is 20 to 80 ms.

4. The process as set forth in claim 3,
wherein
said predetermined time span is 30 to 50 ms.

5. The process as set forth in any of the preceding claims, wherein when the initially unstable wheel regains stability prior to termination of the given time span (Δt) following release of pressure in the brake of said initially unstable wheel, the pressure in the brake of the stable wheel is approximated to the pressure in the brake of said initially unstable wheel shortly before or on initiation of a pressure release in the brake of said initially unstable wheel and subsequently the brake pressures in both brakes are built up in common.

6. The process as set forth in any of the preceding claims, wherein when, subsequent to a release in pressure, an initially unstable wheel experiences a re-acceleration exceeding a predetermined value, at least one pressure build-up pulse (Δp) is provided in the brake of the stable and/or the initially unstable wheel.

## Revendications

1. Procédé pour commander la pression de freinage dans les freins des roues arrière d'un véhicule à deux voies, selon lequel on mesure les vitesses de rotation au moins des roues arrière et la pression de freinage est réduite, maintenue constante ou accrue en fonction d'états instables et stables, qui apparaissent au niveau des roues arrière individuelles, la pression dans les freins d'une roue arrière stable étant rapprochée, au moins par instants, de la pression régnant dans le frein d'une roue arrière instable,
caractérisé en ce qu'après le déclenchement d'une réduction de la pression dans le frein d'une roue arrière instable, la pression dans le frein de la roue arrière stable est maintenue constante pendant un intervalle de temps prédéterminé (Δt) et est ensuite réduite jusqu'à ce que la pression dans le frein de la roue instable soit maintenue constante ou augmente.

2. Procédé selon la revendication 1, caractérisé en ce qu'avant le déclenchement de l'accroissement de pression dans le frein d'une roue auparavant instable, ou lors de ce déclenchement, on rapproche la pression de freinage régnant dans le frein de la roue stable, de la pression régnant dans le frein de la roue auparavant instable, et qu'on établit ensuite la pression de freinage dans les deux freins.

3. Procédé suivant l'une des revendications 1 ou 2, caractérisé par le fait que l'intervalle de temps prédéterminé est compris entre 20 et 80 ms.

4. Procédé selon la revendication 3, caractérisé en ce que l'intervalle de temps prédéterminé est compris entre 30 et 50 ms.

5. Procédé selon l'une des revendications précédentes, caractérisé en ce que, lorsque la roue tout d'abord instable devient à nouveau stable avant que se soit écoulé l'intervalle de temps prédéterminé (Δt) après le début de la réduction de la pression dans le frein de la roue initialement instable, peu avant le déclenchement d'un accroissement de la pression dans le frein de la roue tout d'abord instable, ou lors de ce déclenchement on rapproche la pression régnant dans le frein de la roue stable de la pression régnant dans le frein de la roue tout d'abord instable, et ensuite on augmente conjointement la pression de freinage dans les deux freins.

6. Procédé selon l'une des revendications précédentes, caractérisé en ce que, lorsqu'à la suite d'un accroissement de la pression, une roue tout d'abord instable est soumise à une nouvelle décélération qui est supérieure à une valeur prédéterminée, au moins une impulsion d'accroissement de pression (Δp) est prévue dans le frein de la roue stable et/ou de la roue tout d'abord instable.
